# EUROPÄISCHE PATENTSCHRIFT

(11) **EP 1 847 708 B1**
(45) Veröffentlichungstag und Bekanntmachung des Hinweises auf die Patenterteilung: **22.10.2008**
(21) Anmeldenummer: 06008279.9
(22) Anmeldetag: 21.04.2006
(51) Int. Cl.: F02M 37/22, B67D 5/58, B01D 35/143

(54) **Verfahren zum Ermitteln eines Betriebszustandes eines von einem Fluid durchströmten Filters**
Method for determining an operational state of a fluid conveyed filter
Procédé pour déterminer un état opérationnel d'un filtre passé par un fluide

(43) Veröffentlichungstag der Anmeldung: 24.10.2007
(73) Patentinhaber: Scheidt & Bachmann Gesellschaft mit beschränkter Haftung, 41238 Mönchengladbach (DE)
(72) Erfinder: Miller, Norbert, 41063 Mönchengladbach (DE); Classen, Dieter, 41235 Korschenbroich (DE); Dahlmanns, Christoph, 52511 Geilenkirchen (DE)
(74) Vertreter: Stenger, Watzke & Ring

(56) Entgegenhaltungen:
- EP-A- 1 302 439
- US-A- 5 361 216
- US-A- 5 871 651
- PATENT ABSTRACTS OF JAPAN Bd. 1996, Nr. 02, 29. Februar 1996 (1996-02-29) & JP 07 275621 A (NIPPON OIL CO LTD), 24. Oktober 1995 (1995-10-24)

## Beschreibung

Die vorliegende Erfindung bezieht sich auf ein Verfahren zum Ermitteln eines Betriebszustandes eines von einem Fluid durchströmten Filters, insbesondere eines Filters eines Kraftstoffördersytems.

Kraftstoffördersysteme sind im Stand der Technik bereits bekannt siehe z.B. US-A-5 871 651. Sie umfassen normalerweise einen Kraftstofftank, der über entsprechende Leitungen mit einer oder mit mehreren Zapfsäulen verbunden ist. Die Zapfsäulen verfügen jeweils über ein oder mehrere Zapfventile, die umgangssprachlich als Zapfpistolen bezeichnet werden. Über diese Zapfventile, die über entsprechende Schläuche mit der Zapfsäule verbunden sind, kann Kraftstoff aus dem Kraftstofftank beispielsweise in den Tank eines Kraftfahrzeuges gefüllt werden. Die Messung des der Zapfanlage entnommenen Kraftstoffvolumenstroms erfolgt zum Beispiel über sogenannte Kolbenmesser. Der durch eine Saugpumpe innerhalb der Zapfsäule oder durch eine Druckpumpe außerhalb der Zapfsäule hervorgerufene Fließdruck des Kraftstoffs bewegt mehrere innerhalb des Kolbenmessers vorgesehene Kolben. Die Drehgeschwindigkeit der Welle ist dann ein Maß für den der Zapfanlage entnommenen Kraftstoffvolumenstrom. An der Welle ist entweder ein mechanisches Rechenwerk oder ein elektronischer Impulsgeber angeflanscht, der die Drehbewegung der Welle in für die Elektronik zählbare Impulse umsetzt. Darüber hinaus umfaßt eine Zapfsäule normalerweise eine mechanische Einheit oder eine Rechnereinheit mit einer Mengenanzeige, an der das entnommene Kraftstoffvolumen angezeigt wird, einer Preisanzeige, etc.

Zur Reinigung des Kraftstoffs, bevor dieser über das Zapfventil entnommen wird, sind in einer oder in mehreren Kraftstoffleitungen des Kraftstoffördersystems ein oder mehrere Kraftstoffilter vorgesehen, die Verunreinigungen aus dem diese durchströmenden Kraftstoff filtern. Je nach Verunreinigungsgrad des Kraftstoffs verschmutzen diese Filter unterschiedlich schnell und müssen entsprechend ausgetauscht werden.

Der Austausch der Filter kann beispielsweise in regelmäßigen Zeitabständen erfolgen, zum Beispiel im Zuge von in regelmäßigen Abständen durchzuführenden Wartungsarbeiten des Kraftstoffördersystems. Bei stark verschmutztem Kraftstoff und/oder bei hohen Kraftstoffentnahmemengen setzen sich die Filter unter Umständen jedoch bereits vor dem nächsten Wartungstermin zu, was zu einer Verringerung der Abgabeleistung und entsprechend zu einer Verlängerung der Tankdauer führt. In diesem Falle wäre ein vorzeitiger Austausch des Filters wünschenswert. Bei wenig verschmutztem Kraftstoff und/oder kleineren Kraftstoffentnahmemengen werden die Filter beim turnusmäßigen Austausch unter Umständen vorzeitig ausgetauscht, wodurch unnötige Personal- und Materialkosten entstehen.

Entsprechend ist es wünschenswert, ein Verfahren zum Ermitteln des tatsächlichen Betriebszustandes entsprechender Filter zu schaffen.

Diesbezüglich sind Verfahren bekannt, die über Druckdifferenzmessungen ein Verschmutzen von Filtern einer Zapfanlage erfassen, um entsprechende Serviceeinsätze zum Austausch der Filter zu initiieren. Die Druckdifferenzmessungen werden mit Hilfe entsprechender Drucksensoren durchgeführt, die zusätzlich in den Kraftstoffleitungen der Zapfanlage angeordnet werden, was mit unerwünschten Zusatzkosten verbunden ist. Die Druckmessungen werden dann von einer entsprechenden Auswerteelektronik analysiert. Ändert sich der Druck in unzulässiger Weise, so ist dies ein Anzeichen dafür, daß ein Filter verstopft ist, woraufhin ein entsprechendes Signal ausgegeben wird, um dem Wartungspersonal anzuzeigen, daß ein Filteraustausch stattfinden muß.

Es ist eine **Aufgabe** der vorliegenden Erfindung, ein alternatives und insbesondere preiswerteres Verfahren zum Ermitteln eines Betriebszustandes eines von einem Fluid durchströmten Filters zu schaffen.

Diese Aufgabe wird gemäß der vorliegenden Erfindung durch ein Verfahren nach Anspruch 1 und ein Fluidfördersystem nach Anspruch 11 **gelöst** . Die abhängigen Ansprüche beziehen sich auf individuelle Ausgestaltungen der vorliegenden Erfindung.

Bei dem Verfahren zum Ermitteln eines Betriebszustands eines von einem Fluid durchströmten Filters gemäß der vorliegenden Erfindung wird der Betriebszustand des Filters basierend auf dem Volumenstrom des den Filter durchströmenden Fluids ermittelt. Das Verschmutzen eines Filters geht mit einer Verringerung des Volumenstroms einher, so daß der Austauschzeitpunkt eines Filters anhand des Volumenstroms definiert und erfaßt werden kann.

Erfindungsgemäß wird zunächst ein Soll-Volumenstrom eines einen ordnungsgemäß funktionierenden Filter durchströmenden Fluids festgelegt. Dazu werden bevorzugt Ist-Volumenströme eines ordnungsgemäß funktionierenden Filters, vorteilhaft eines neuen Filters, während eines vorbestimmten Erfassungsintervalls erfaßt und zur Festlegung des Soll-Volumenstroms herangezogen.

Bei dem vorbestimmten Erfassungsintervall kann es sich beispielsweise um eine vorbestimmte Zeitdauer handeln, in der Fluid durch den Filter strömt. Im Falle eines Kraftstoffördersystems ist diese Zeitdauer vorteilhaft derart bemessen, daß sie eine Mehrzahl von Tankvorgängen beinhaltet. Auf diese Weise können temporäre Schwankungen der zur Festlegung des Soll-Volumenstroms erfaßten Ist-Volumenströme, die beispielsweise aus dem Tankverhalten der Kunden oder anderen Faktoren resultieren, entsprechend berücksichtigt werden. Alternativ kann das vorbestimmte Erfassungsintervall direkt über eine Anzahl von Tankvorgängen oder über ein durch den Filter strömendes Fluidvolumen definiert werden, wobei das Fluidvolumen ebenfalls bevorzugt mehrere Tankvorgänge umfaßt, um temporäre Schwankungen berücksichtigen zu können.

Die während dem vorbestimmten Erfassungsintervall erfaßten Ist-Volumenströme werden dann zur Bildung des Soll-Volumenstroms verwendet, der beispielsweise dem während des vorbestimmten Erfassungsintervalls erfaßten maximalen Ist-Volumenstrom entsprechen kann.

Bei der Festlegung des Soll-Volumenstroms werden vorteilhaft weitere Parameter berücksichtigt, insbesondere die Tankdauer und/oder der Füllstand des Fluidvorratstanks und/oder die Entfernung zwischen der Fluidförderpumpe und den einzelnen Zapfventilen und/oder die Anzahl der Zapfventile und/oder meteorologische Einflüsse oder dergleichen. Diese Parameter können die Werte der erfaßten Ist-Volumenströme und somit die Festlegung des Soll-Volumenstroms beeinflussen. Beispielsweise werden die Werte der Ist-Volumenströme bei vollem Fluidvorratstank aufgrund des durch den Füllstand verursachten höheren hydrostatischen Druckes innerhalb der Leitungen des Fluidfördersystems bei sonst gleichbleibenden Rahmenbedingungen größer als bei einem fast leeren Fluidvorratstank sein. Auch wird der Förderdruck an den einzelnen Zapfventilen abfallen, je mehr Zapfventile gleichzeitig in Betrieb sind oder je länger die Leitung zwischen der Fluidförderpumpe und dem entsprechenden Zapfventil ist. Auch der sich aufgrund meteorologischer Einflüsse ändernde Umgebungsdruck wirkt sich auf die zu erfassenden Ist-Volumenströme aus. Durch die Berücksichtigung solcher Parameter können die durch diese erzeugten Schwankungen bei der Festlegung des Soll-Volumenstroms einbezogen werden.

Ausgehend von dem Soll-Volumenstrom wird dann bevorzugt ein Toleranzbereich festgelegt, der einen noch ausreichend gut funktionierenden Filter repräsentiert. Der Soll-Volumenstrom und der Toleranzbereich werden bevorzugt in einer Speichereinheit einer entsprechenden Auswerteelektronik hinterlegt.

Sobald der Soll-Volumenstrom und gegebenenfalls der Toleranzbereich festgelegt sind, werden erfindungsgemäß anschließend Ist-Volumenströme des den Filter während darauffolgender Tankvorgänge durchströmenden Fluids bevorzugt kontinuierlich erfaßt und mit dem in der Auswerteelektronik gespeicherten Soll-Volumenstrom verglichen. Sind die Werte der erfaßten Ist-Volumenströme geringer als der festgelegte Soll-Volumenstrom, so ist davon auszugehen, daß der Filter durch Verunreinigungen verstopft ist. Liegt der erfaßte lst-Volumenstrom hingegen oberhalb des Soll-Volumenstroms, so liegt die Annahme nahe, daß der Filter einen Defekt aufweist, wie beispielsweise ein Loch oder dergleichen, so daß seine Reinigungsfunktion beeinträchtigt ist.

Das Festlegen des Soll-Volumenstroms, das Erfassen von Ist-Volumenströmen, das Vergleichen der Volumenströme und das letztendliche Ermitteln des Betriebszustandes des zumindest einen Filters erfolgt bevorzugt unter Verwendung räumlich getrennter Rechnereinheiten und/oder einer Zentralrechnereinheit.

Bevorzugt werden aus den zuvor genannten Gründen auch bei der Erfassung der Ist-Volumenströme weitere Parameter berücksichtigt, insbesondere die Tankdauer und/oder der Füllstand des Fluidvorratstanks und/oder die Entfernung zwischen der Fluidförderpumpe und den einzelnen Zapfventilen und/oder die Anzahl der Zapfventile und/oder meteorologische Einflüsse oder dergleichen, um durch diese Parameter erzeugte Schwankungen einzubeziehen.

Vorteilhaft wird ein Prüfintervall festgelegt, das ähnlich wie das Erfassungsintervall beispielsweise durch eine vorbestimmte Anzahl von Tankvorgängen, eine vorbestimmte Zeitdauer, während der Fluid durch den zu überwachenden Filter strömt, ein vorbestimmtes Fördervolumen oder dergleichen definiert sein kann. Dieses Prüfintervall dient dazu, die Ist-Volumenströme über einen längeren Zeitraum zu beobachten, bevor Rückschlüsse auf einen ordnungsgemäß oder nicht ordnungsgemäß arbeitenden Filter gezogen werden. Entsprechend wird nicht bei jedem erfaßten Ist-Volumenstrom, der nicht dem Soll-Volumenstrom entspricht, auf einen nicht ordnungsgemäß arbeitenden Filter geschlossen, wodurch Fehlerquellen eliminiert werden. Das Prüfintervall beginnt bevorzugt nach Ablauf stets von neuem. Vorteilhaft beginnt das Prüfintervall immer dann von neuem, wenn der festgelegte Soll-Volumenstrombereich durch einen erfaßten Ist-Volumenstrom erreicht wird, auch wenn das Prüfintervall noch nicht vollständig abgeschlossen ist. Auf diese Weise wird garantiert, daß ein erfaßter Ist-Volumenstrom, der nicht dem Soll-Volumenstrom entspricht, mehrfach überprüft wird, bevor auf einen nicht ordnungsgemäß arbeitenden Filter geschlossen wird.

Erreichen die erfaßten Ist-Volumenströme den festgelegten Soll-Volumenstrom nicht, so wird bevorzugt automatisch ein Signal erzeugt, das einen nicht ordnungsgemäß funktionierenden Filter anzeigt. Das Signal kann gespeichert und/oder akustisch, optisch oder in sonstiger Art und Weise ausgegeben werden, um dem Servicepersonal anzuzeigen, daß der Filter ausgetauscht werden muß.

Das erfindungsgemäße Verfahren wird bevorzugt zur Ermittlung eines Betriebszustandes eines oder mehrerer Filter eines Kraftstoffördersystems verwendet. Wie eingangs ausgeführt, verfügen Kraftstoffördersysteme normalerweise bereits über Volumenstrommeßeinrichtungen. Der besondere Vorteil des erfindungsgemäßen Verfahrens in Bezug auf Kraftstoffördersysteme besteht also darin, daß keine zusätzlichen Sensoren zur Filterüberprüfung in das Kraftstoffördersystem integriert werden müssen, wie beispielsweise Drucksensoren oder dergleichen. Auch ist normalerweise bereits eine Auswerteeinrichtung vorhanden, die lediglich in Bezug auf das erfindungsgemäße Verfahren eingerichtet werden muß. Die Kosten zur Einrichtung und Durchführung des erfindungsgemäßen Verfahrens sind entsprechend gering, da die dazu erforderlichen Einrichtungen bei herkömmlichen Kraftstoffördersystemen bereits vorhanden sind.

Ferner bezieht sich die vorliegende Erfindung auf ein Fluidfördersystem, insbesondere Kraftstoffördersystem, mit zumindest einem Filter, zumindest einer Volumenstrommeßeinrichtung zum Erfassen eines Volumenstroms des den Filter durchströmenden Fluids und einer Auswerteelektronik eingerichtet zur Durchführung des erfindungsgemäßen Verfahrens.

Die Auswerteelektronik des Fluidfördersystems umfaßt bevorzugt zumindest eine mit einer Volumenstrommeßeinrichtung datentechnisch verbundene Rechnereinheit, an die Daten in Bezug auf die von der Volumenstrommeßeinrichtung erfaßten Volumenströme gesendet und in der diese Daten zum Ermitteln des Betriebszustandes zumindest eines Filters weiterverarbeitet werden. Bei dieser Rechnereinheit kann es sich um eine Zentralrechnereinheit handeln, in der sämtliche hinsichtlich des erfindungsgemäßen Verfahrens relevanten Daten gespeichert und verarbeitet werden. Ferner können weitere Rechnereinheiten vorgesehen sein, beispielsweise an jeder Zapfsäule, in denen Daten zwischengespeichert und/oder einer Datenverarbeitung unterzogen werden, bevor sie an die Zentralrechnereinheit zur Endverarbeitung weitergeleitet werden. Zum Speichern insbesondere eines festgelegten Soll-Volumenstroms können die Zentralrechnereinheit und/oder die weiteren Rechnereinheiten entsprechende Speichereinheiten aufweisen.

Bevorzugt umfaßt das Fluidfördersystem eine oder mehrere Fluidabgabeeinrichtungen, insbesondere in Form von sogenannten Zapfsäulen mit einem oder mehreren Zapfventilen zum Betanken von Fahrzeugen. Dabei weist jede Fluidabgabeeinrichtung vorteilhaft zumindest eine Volumenstrommeßeinrichtung auf, so daß Volumenströme jeder Fluidabgabeeinrichtung erfaßt werden können.

Ferner umfaßt das erfindungsgemäße Fluidfördersystem bevorzugt zumindest einen Sensor zum Erfassen eines weiteren Parameters, insbesondere einen die Tankdauer und/oder den Füllstand eines Fluidvorratstanks und/oder meteorologische Einflüsse oder dergleichen überwachenden Sensor.

Schließlich betrifft die vorliegende Erfindung eine Volumenstrommeßeinrichtung zur Durchführung des erfindungsgemäßen Verfahrens, die eine Speichereinheit zum Speichern des Soll-Volumenstroms aufweist. Ferner kann die Volumenstrommeßeinrichtung auch eine Auswerteelektronik umfassen, die zur Durchführung des gesamten oder eines Teils des erfindungsgemäßen Verfahren eingerichtet ist. Ein wesentlicher Vorteil der Integration einer Speichereinheit und/oder einer Auswerteelektronik in die Volumenstrommeßeinrichtung besteht darin, daß ein herkömmliches Fluidfördersystem durch Austausch der vorhandenen Volumenstrommeßeinrichtung durch eine erfindungsgemäße Volumenstrommeßeinrichtung in einfacher Art und Weise derart nachgerüstet werden kann, daß das erfindungsgemäße Verfahren durchführbar ist. Bei der Volumenstrommeßeinrichtung handelt es sich bevorzugt um einen Kolbenmesser.

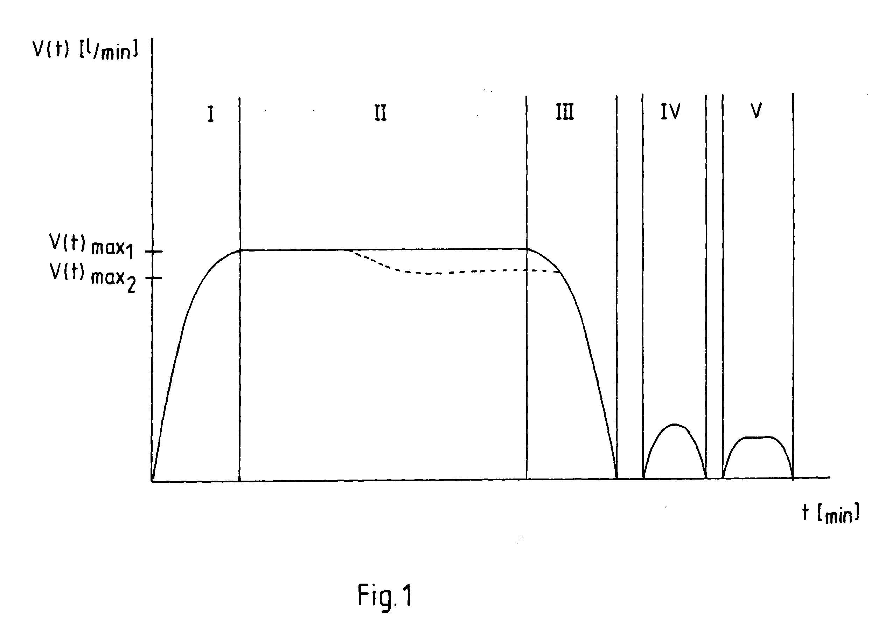

Nachfolgend wird die vorliegende Erfindung unter Bezugnahme auf eine beispielhafte Ausführungsform des erfindungsgemäßen Verfahrens unter Bezugnahme auf die Zeichnung genauer beschrieben, die beispielhaft einen Tankvorgang anhand eines Graphen zeigt.

Bei dem Ausführungsbeispiel handelt es sich um ein Verfahren zum Ermitteln eines Betriebszustandes eines Filters einer Kraftstofförderanlage. Die Kraftstofförderanlage umfaßt einen Kraftstofftank, der über entsprechende Leitungen mit mehreren Zapfsäulen verbunden ist. Jede Zapfsäule verfügt über zumindest ein Zapfventil. Über diese Zapfventile, die über entsprechende Schläuche mit den Zapfsäulen verbunden sind, kann Kraftstoff aus dem Kraftstofftank beispielsweise in den Tank eines Kraftfahrzeuges gefüllt werden. Die Messung des der Kraftstofförderanlage entnommenen Kraftstoffvolumenstroms erfolgt über Volumenstrommeßeinrichtungen, beispielsweise in Form von Kolbenmessern. Der durch eine Saugpumpe innerhalb der Zapfsäule oder durch eine Druckpumpe außerhalb der Zapfsäule hervorgerufene Fließdruck des Kraftstoffs bewegt mehrere innerhalb des jeweiligen Kolbenmessers vorgesehene Kolben. Die Drehgeschwindigkeit der Welle ist dann ein Maß für den das Zapfventil durchströmenden Kraftstoffvolumenstrom. An der Welle ist ein elektronischer Impulsgeber vorgesehen, der die Drehbewegung der Welle in für eine an jeder Zapfsäule vorgesehen Rechnereinheit zählbare Impulse umsetzt. Die Rechnereinheiten verfügen jeweils über eine Anzeigeeinrichtung, beispielsweise in Form eines Displays, über die dem tankenden Kunden die getankte Kraftstoffmenge, der Kaufpreis etc. angezeigt werden. Ferner verfügt das Fluidfördersystem über eine zentrale Rechnereinheit, die zur Durchführung des erfindungsgemäßen Verfahrens eingerichtet und mit den einzelnen Rechnereinheiten datentechnisch verbunden ist, so daß insbesondere Daten in Bezug auf den von den Volumenstrommeßeinrichtungen erfaßten Volumenströmen an die Zentralrechnereinheit übermittelt werden können.

Die Zeichnung zeigt beispielhaft einen Tankvorgang anhand eines Graphen, der den sich über die Zeit t ändernden Volumenstrom V(t) darstellt. Die durchgezogene Linie kennzeichnet dabei einen Tankvorgang, bei dem nur eines von mehreren Zapfventilen des Fluidfördersystems in Benutzung ist.

Wird das Zapfventil vollständig geöffnet, der Hebel einer Zapfpistole also nach Einführen des Tankrüssels in die Tanköffnung eines Fahrzeugs vollständig durchgedrückt, so steigt der Wert des den Kolbenmesser durchströmenden Volumenstroms von 0 auf den entsprechenden Maximalwert V(t)_{max.1} an, siehe Bereich I. Bleibt das Zapfventil dann vollständig geöffnet, so ergibt sich ein parallel zur X-Achse erstreckender Kurvenverlauf (durchgezogene Linie), der als Bereich II gekennzeichnet ist. Wird das Ventil dann geschlossen, der Hebel der Zapfpistole also losgelassen, so fällt der Wert des den Kolbenmesser durchströmenden Volumenstroms wieder auf den Wert 0 ab, siehe Bereich III. Häufig wird das Zapfventil nach dem eigentlichen Tankvorgang nochmals vorsichtig betätigt, um insbesondere den für den getankten Kraftstoff zu zahlenden Geldbetrag zu korrigieren, siehe hierzu die Bereiche IV und V.

Sind gleichzeitig mehrere Zapfventile des Fluidfördersystems geöffnet, werden also zeitgleich an mehreren der zur Verfügung stehenden Zapfventile Kraftfahrzeuge betankt, so sinkt der maximale Volumenstrom V(t)_{max.1} normalerweise geringfügig ab, beispielsweise auf V(t)_{max.2}, was durch die gestrichelte Linie in den Bereichen II und III angedeutet ist.

Weitere Schwankungen des durch die durchgezogene Linie dargestellten Kurvenverlaufs können sich durch die Länge der Leitungen zwischen der Pumpe und den einzelnen Zapfpistolen aufgrund von Reibungsverlusten, durch den sich aufgrund meteorologischer Einflüsse verändernden Umgebungsdruck, den Füllstand des Fluidvorratstanks, das Tankverhalten des Kunden oder dergleichen ergeben.

Zum Festlegen des Kraftstoff-Soll-Volumenstrombereichs, der den ordnungsgemäßen Betriebszustand des zu überwachenden Filters repräsentiert, werden während eines Erfassungsintervalls, das vorliegend fünf Tankvorgänge umfaßt, mit Hilfe der Volumenstrommeßeinrichtung kontinuierlich Ist-Volumenströme eines einen neuen und somit ordnungsgemäß funktionierenden Filter durchströmenden Kraftstoffs erfaßt. Entsprechend ergeben sich fünf verschiedene der in der Zeichnung dargestellte Graphen. Anhand der erfaßten Daten kann nun ein Soll-Volumenstrombereich definiert werden, der bevorzugt sämtliche maximalen Volumenströme V(t)ₘₐₓ. zuzüglich entsprechender Toleranzen umfaßt, wobei die Toleranzen insbesondere auf Erfahrungswerten beruhen. Der Soll-Volumenstrom definiert denjenigen Volumenstrombereich, der einen ordnungsgemäß funktionierenden Filter repräsentiert.

Der festgelegte Soll-Volumenstrombereich wird dann in einem Speicher der Zentralrechnereinheit hinterlegt.

Nach Festlegung des Soll-Volumenstrombereichs wird ein Prüfintervall festgelegt, das beispielsweise zehn Tankvorgänge umfaßt.

Anschließend werden mit Hilfe der den Zapfpistolen zugeordneten Volumenstrommeßeinrichtungen kontinuierlich Ist-Volumenströme erfaßt. Diese Ist-Volumenströme werden von den einzelnen Rechnereinheiten an die Zentralrechnereinheit in Datenform weitergeleitet und mit dem gespeicherten Soll-Volumenstrombereich verglichen.

Sobald nun innerhalb des Prüfintervalls von zehn Tankvorgängen ein Ist-Volumenstrom in den Soll-Volumenstrombereich fällt, ist dies ein Anzeichen dafür, daß der Filter ordnungsgemäß funktioniert, weshalb das Prüfintervall zurückgesetzt wird und von neuem zu laufen beginnt. Durch die Definition eines längeren Prüfintervalls, hier zehn Tankvorgänge, sollen insbesondere äußere Einflüsse eliminiert werden, die unabhängig vom Verstopfungsgrad des zu überwachenden Filters zu einem geringen Ist-Volumenstrom führen. Beispielsweise kommt es vor, daß ein Kunde das Zapfventil während eines Tankvorgangs nicht vollständig öffnet, da er nur eine geringe Kraftstoffmenge in den Tank seines Kraftfahrzeugs füllen will. Auf diese Weise kann der festgelegte Soll-Volumenstrombereich durch die erfaßten Ist-Volumenströme nicht erreicht werden. Entsprechend umfaßt das Prüfintervall im vorliegenden Beispiel zehn Tankvorgänge, wobei davon ausgegangen wird, daß zumindest einer der zehn Kunden das Zapfventil vollständig öffnet, so daß der maximale ist-Volumenstrom erreicht wird, der bei ordnungsgemäßer Funktion des Filters in den Soll-Volumenstrombereich fallen sollte.

Erreicht hingegen keiner der erfaßten Ist-Volumenströme innerhalb des Prüfintervalls von zehn Tankvorgängen den Soll-Volumenstrombereich, so liegt ein Fehler vor, der im vorliegenden Ausführungsbeispiel durch ein optisches Signal, beispielsweise durch eine Warnlampe, angezeigt wird, um das Personal darauf aufmerksam zu machen, daß der Filter ausgetauscht werden muß. Liegen sämtliche der erfaßten Ist-Volumenströme unterhalb des festgelegten Soll-Volumenstrombereiches, so ist dies ein Anzeichen für einen verstopften Filter. Liegen hingegen erfaßte Ist-Volumenströme, insbesondere im Bereich II, oberhalb des festgelegten Soll-Volumenstrombereichs, so ist der Filter beschädigt, beispielsweise durch Löcher oder Risse, weshalb ein unzulässig hoher Kraftstoffvolumenstrom den Filter passiert.

Nach Austausch eines nicht mehr ordnungsgemäß funktionierenden Filters wird unter Verwendung des eingebauten neuen Filters wieder ein neuer Soll-Volumenstrombereich festgelegt, so daß erneut Ist-Volumenströme erfaßt und mit dem Soll-Volumenstrombereich verglichen werden können.

Es sollte klar sein, daß das zuvor beschriebene Verfahren vollständig oder zumindest teilweise automatisiert durchführbar ist.

Ferner sei darauf hingewiesen, daß bei dem zuvor beschriebenen Ausführungsbeispiel die Position des Filters innerhalb des Fluidfördersystems nicht genau definiert wurde, da die Position für das dem erfindungsgemäßen Verfahren zugrunde liegende Prinzip im wesentlichen unerheblich ist. Je nach Position des Filters können zwar entsprechende Anpassungen des Verfahrens erforderlich sein, die jedoch in Kenntnis der vorliegenden Erfindung einfach durchzuführen sind.

Schließlich sollte klar sein, daß die zuvor beschriebene Ausführungsform nur als Beispiel dient und nicht einschränkend ist. Vielmehr sind Änderungen und Modifikationen möglich, ohne den Schutzbereich der vorliegenden Erfindung zu verlassen, der durch die beiliegenden Ansprüche definiert ist.

## Patentansprüche

1. Verfahren zum Ermitteln eines Betriebszustandes zumindest eines von einem Fluid durchströmten Filters, insbesondere eines Filters eines Kraftstoffördersystems, umfassend die Schritte:
- Erfassen von Ist-Volumenströmen
- Festlegen zumindest eines Soll-Volumenstroms durch Verwendung von Ist-Volumenströmen, eines ordnungsgemäß funktionierenden Filters, die während eines vorbestimmten Erfassungsintervals erfaßt werden und
- Ermitteln des Betriebszustandes des zumindest einen Filters basierend auf einem Vergleich der Ist-Volumenströme mit dem Soll-Volumenstrom,
**dadurch gekennzeichnet, daß** bei der Festlegung des Soll-Volumenstroms weitere Parameter berücksichtigt werden.

2. Verfahren nach Anspruch 1, **dadurch gekennzeichnet, daß** das Erfassungsintervall durch eine vorbestimmte Anzahl von Tankvorgängen, eine vorbestimmte Zeitdauer oder ein vorbestimmtes Fördervolumen definiert ist.

3. Verfahren nach einem der vorhergehenden Ansprüche, **dadurch gekennzeichnet, daß** als weitere Parameter der Füllstand des Fluidvorrattanks und/oder die Tankdauer und/oder die Entfernung zwischen der Fluidförderpumpe zum Fluidvorratstank und/oder die Anzahl der Zapfventile und/oder meteorologische Einflüsse berücksichtigt werden.

4. Verfahren nach einem der vorhergehenden Ansprüche, **dadurch gekennzeichnet, daß** ausgehend vom Soll-Volumenstrom ein Toleranzbereich festgelegt wird.

5. Verfahren nach einem der vorhergehenden Ansprüche, **dadurch gekennzeichnet, daß** der Soll-Volumenstrom und, wenn festgelegt, der Toleranzbereich in einer Speichereinheit gespeichert werden.

6. Verfahren nach einem der vorhergehenden Ansprüche, **dadurch gekennzeichnet, daß** bei der Erfassung der Ist-Volumenströme weitere Parameter erfaßt werden, insbesondere die Tankdauer und/oder der Füllstand des Fluidvorrattanks und/oder die Entfernung zwischen der Fluidförderpumpe zum Fluidvorratstank und/oder die Anzahl der Zapfventile und/oder meteorologische Einflüsse.

7. Verfahren nach einem der vorhergehenden Ansprüche, **dadurch gekennzeichnet, daß** das Festlegen des Soll-Volumenstroms, das Erfassen von Ist-Volumenströmen, das Vergleichen der Volumenströme und das Ermitteln des Betriebszustandes des zumindest einen Filters unter Verwendung räumlich getrennter Rechnereinheiten und/oder einer Zentralrechnereinheit erfolgen.

8. Verfahren nach einem der vorhergehenden Ansprüche, **dadurch gekennzeichnet, daß** ein Signal ausgegeben wird, wenn die erfaßten Ist-Volumenströme den festgelegten Soll-Volumenstrom nicht innerhalb eines vorbestimmten Prüfintervalls erreichen.

9. Verfahren nach Anspruch 8, **dadurch gekennzeichnet, daß** das Prüfintervall durch eine vorbestimmte Anzahl von Tankvorgängen, eine vorbestimmte Zeitdauer oder ein vorbestimmtes Fördervolumen definiert ist.

10. Verfahren nach Anspruch 8 oder 9, **dadurch gekennzeichnet, daß** das Prüfintervall bei jedem Erreichen des festgelegten Soll-Volumenstroms von neuem beginnt.

11. Fluidfördersystem, insbesondere Kraftstoffördersystem, mit zumindest einem Filter, zumindest einer Volumenstrommeßeinrichtung zum Erfassen eines Volumenstroms des den Filter durchströmenden Fluids und einer Auswerteelektronik eingerichtet zur Durchführung des Verfahrens nach einem der vorhergehenden Ansprüche, **dadurch gekennzeichnet, daß** das System zumindest einen Sensor zum Erfassen des weiterer Parameter umfaßt.

12. Fluidfördersystem nach Anspruch 11, **dadurch gekennzeichnet, daß** die Auswerteelektronik zumindest eine mit einer Volumenstrommeßeinrichtung datentechnisch verbundene Rechnereinheit aufweist.

13. Fluidfördersystem nach Anspruch 12, **dadurch gekennzeichnet, daß** die zumindest eine Rechnereinheit eine Speichereinheit zum Speichern eines Soll-Volumenstroms umfaßt.

14. Fluidfördersystem nach Anspruch 11 bis 13, **dadurch gekennzeichnet, daß** die Auswerteelektronik eine Zentralrechnereinheit aufweist, die mit zumindest einer Volumenstrommeßeinrichtung oder mit zumindest einer Rechnereinheit datentechnisch verbunden ist.

15. Fluidfördersystem nach Anspruch 14, **dadurch gekennzeichnet, daß** die Zentralrechnereinheit eine Speichereinheit zum Speichern eines Soll-Volumenstroms umfaßt.

16. Fluidfördersystem nach einem der Ansprüche Anspruch 11 bis 15, **dadurch gekennzeichnet, daß** das System ein oder mehrere Fluidabgabeeinrichtungen umfaßt.

17. Fluidfördersystem nach Anspruch 16, **dadurch gekennzeichnet, daß** jede Fluidabgabeeinrichtung zumindest eine Volumenstrommeßeinrichtung umfaßt.

18. Fluidfördersystem nach Anspruch 17, **dadurch gekennzeichnet, daß** die Volumenstrommeßeinrichtung einen Speicher zum Speichern eines Soll-Volumenstroms umfaßt.

19. Fluidfördersystem nach einem der Ansprüche 17 bis 18, **dadurch gekennzeichnet, daß** jede Fluidabgabeeinrichtung zumindest ein Zapfventil umfaßt.

20. Fluidfördersystem nach einem der Ansprüche 16 bis 19, **dadurch gekennzeichnet, daß** zumindest der Sensor als weiteren Parameter den Füllstand des Fluidvorrattanks und/oder die Tankdauer und/oder meteorologische Einflüsse erfaßt.

21. Volumenstrommeßeinrichtung zur Durchführung des Verfahrens nach einem der Ansprüche 1 bis 10, **dadurch gekennzeichnet, daß** diese eine Speichereinheit zum Speichern eines Soll-Volumenstroms aufweist.

22. Volumenstrommeßeinrichtung nach Anspruch 21, **dadurch gekennzeichnet, daß** diese eine Auswerteelektronik eingerichtet zur Durchführung des Verfahrens nach einem der Ansprüche 1 bis 10 umfaßt.

23. Volumenstrrommeßeinrichtung nach Anspruch 21 oder 22, **dadurch gekennzeichnet, daß** die Volumenstrommeßeinrichtung als Kolbenmesser ausgebildet ist.

## Claims

1. A method of determining an operational state of at least one filter through which a fluid flows, particularly a filter of a fuel delivery system, including the following steps:
determining actual volumetric flows
determining at least one desired volumetric flow by using actual volumetric flows of a correctly functioning filter, which are detected during a predetermined detection period and
determining the operational state of the at least one filter based on a comparison of the actual volumetric flows with the desired volumetric flow,
**characterised in that** further parameters are taken into account in the determination of the desired volumetric flow.

2. A method as claimed in claim 1, **characterised in that** the detection period is defined by a predetermined number of refuelling processes, a predetermined period of time or a predetermined delivery volume.

3. A method as claimed in one of the preceding claims, **characterised in that** the filling level of the fluid storage tank and/or the refuelling duration and/or the distance between the fluid delivery pump to the fluid storage tank and/or the number of the filling nozzles and/or meteorological influences are taken account of as the further parameters.

4. A method as claimed in one of the preceding claims, **characterised in that** a tolerance range is determined starting from the desired volumetric flow.

5. A method as claimed in one of the preceding claims, **characterised in that** the desired volumetric flow and, when determined, the tolerance range are stored in a storage unit.

6. A method as claimed in one of the preceding claims, **characterised in that** when detecting the actual volumetric flows, further parameters are detected, particularly the refuelling duration and/or the filling level of the fluid storage tank and/or the distance between the fluid delivery pump to the fluid storage tank and/or the number of the filling nozzles and/or meteorological influences.

7. A method as claimed in one of the preceding claims, **characterised in that** the determination of the desired volumetric flow, the detection of actual volumetric flows, the comparison of the volumetric flows and the determination of the operational state of the at least one filter are effected using spatially separated computer units and/or a central computer unit.

8. A method as claimed in one of the preceding claims, **characterised in that** a signal is produced when the detected actual volumetric flows do not reach the determined desired volumetric flow within a predetermined checking period.

9. A method as claimed in claim 8, **characterised in that** the checking period is defined by a predetermined number of refuelling processes, a predetermined period of time or a predetermined delivery volume.

10. A method as claimed in claim 8 or 9, **characterised in that** the checking period begins again each time the determined desired volumetric flow is reached.

11. A fluid delivery system, particularly a fuel delivery system, with at least one filter, at least one volumetric flow measuring device for detecting a volumetric flow of the fluid flowing through the filter and an electronic analysis system arranged to the carry out the method as claimed in one of the preceding claims, **characterised in that** the system includes at least one sensor for detecting further parameters.

12. A fluid delivery system as claimed in claim 11, **characterised in that** the electronic analysis system includes at least one computer unit connected for data transfer to a volumetric flow measuring device.

13. A fluid delivery system as claimed in claim 12, **characterised in that** the at least one computer unit includes a storage unit for storing a desired volumetric flow.

14. A fluid delivery system as claimed in claims 11 to 13, **characterised in that** the electronic analysis system includes a host computer unit, which is connected for data transfer to at least one volumetric flow measuring device or to at least one computer unit.

15. A fluid delivery system as claimed in claim 14, **characterised in that** the host computer unit includes a storage unit for storing a desired volumetric flow.

16. A fluid delivery system as claimed in one of claims 11 to 15, **characterised in that** the system includes one or more fluid discharge devices.

17. A fluid delivery system as claimed in claim 16, **characterised in that** each fluid discharge device includes at least one volumetric flow measuring device.

18. A fluid delivery system as claimed in claim 17, **characterised in that** the volumetric flow measuring device includes a store for storing a desired volumetric flow.

19. A fluid delivery system as claimed in one of claims 17 to 18, **characterised in that** each fluid discharge device includes at least one filling nozzle.

20. A fluid delivery system as claimed in one of claims 16 to 19, **characterised in that** at least the sensor detects the filling level of the fluid storage tank and/or the refuelling duration and/or meteorological influences as further parameters.

21. A volumetric flow measuring device for carrying out the method as claimed in one of claims 1 to 10, **characterised in that** it includes a storage unit for storing a desired volumetric flow.

22. A volumetric flow measuring device as claimed in claim 21, **characterised in that** it includes an electronic analysis system arranged to carry out the method as claimed in one of claims 1 to 10.

23. A volumetric flow measuring device as claimed in claim 22 or 22, **characterised in that** the volumetric flow measuring device is constructed in the form of a piston meter.

## Revendications

1. Procédé pour déterminer un état de fonctionnement d'au moins un filtre traversé par un fluide, en particulier d'un filtre d'un système de transport de carburant, comprenant les étapes suivantes :
- mesure de débits volumétriques réels
- détermination d'au moins un débit volumétrique de consigne à l'aide de débits volumétriques réels d'un filtre fonctionnant correctement, qui sont relevés pendant un intervalle de détection prédéterminé, et
- détermination de l'état de fonctionnement de l'au moins un filtre à partir d'une comparaison des débits volumétriques réels avec le débit volumétrique de consigne,
**caractérisé en ce que** la détermination du débit volumétrique de consigne tient compte d'autres paramètres.

2. Procédé selon la revendication 1, **caractérisé en ce que** l'intervalle de détection est défini par un nombre prédéterminé d'opérations de remplissage d'un réservoir, un intervalle de temps prédéterminé ou un volume transféré prédéterminé.

3. Procédé selon l'une des revendications précédentes, **caractérisé en ce que** les autres paramètres comprennent le niveau de remplissage du réservoir de fluide et/ou la durée de remplissage du réservoir et/ou la distance entre la pompe de transfert du fluide et le réservoir de fluide et/ou le nombre de robinets de prélèvement et/ou des influences météorologiques.

4. Procédé selon l'une des revendications précédentes, **caractérisé en ce qu'**une plage de tolérance est déterminée à partir du débit volumétrique de consigne.

5. Procédé selon l'une des revendications précédentes, **caractérisé en ce que** le débit volumétrique de consigne et, lorsqu'elle est déterminée, la plage de tolérance sont enregistrés dans une unité de mémoire.

6. Procédé selon l'une des revendications précédentes, **caractérisé en ce que** lors de la détection des débits volumétriques réels, d'autres paramètres sont captés, en particulier la durée de remplissage du réservoir et/ou le niveau de remplissage du réservoir de fluide et/ou la distance entre la pompe de transfert du fluide et le réservoir de fluide et/ou le nombre de robinets de prélèvement et/ou des météorologiques.

7. Procédé selon l'une des revendications précédentes, **caractérisé en ce que** la détermination du débit volumétrique de consigne, la mesure des débits volumétriques réels, la comparaison des débits volumétriques et la détermination de l'état de fonctionnement de l'au moins un filtre sont effectuées à l'aide d'unités de calcul séparées dans l'espace et/ou d'une unité de calcul centrale.

8. Procédé selon l'une des revendications précédentes, **caractérisé en ce qu'**un signal est émis lorsque les débits volumétriques réels captés n'atteignent pas le débit volumétrique de consigne déterminé dans un intervalle de contrôle prédéterminé.

9. Procédé selon la revendication 8, **caractérisé en ce que** l'intervalle de contrôle est défini par un nombre prédéterminé d'opérations de remplissage du réservoir, un intervalle de temps prédéterminé ou un volume transféré prédéterminé.

10. Procédé selon la revendication 8 ou 9, **caractérisé en ce que** l'intervalle de contrôle recommence au début à chaque fois que le débit volumétrique de consigne déterminé est atteint.

11. Système de transfert de fluide, en particulier système de transfert de carburant, avec au moins un filtre, au moins un dispositif de mesure du débit volumétrique pour la détection d'un débit volumétrique du fluide traversant le filtre et une électronique d'évaluation conçue pour exécuter le procédé selon l'une des revendications précédentes, **caractérisé en ce que** le système comprend au moins un capteur pour détecter les autres paramètres.

12. Système de transfert de fluide selon la revendication 11, **caractérisé en ce que** l'électronique d'analyse comprend au moins une unité de calculateur reliée à un dispositif de mesure du débit volumétrique de façon à échanger des données..

13. Système de transfert de fluide selon la revendication 12, **caractérisé en ce que** l'au moins une unité de calcul comprend une unité de mémoire pour l'enregistrement d'un débit volumétrique de consigne.

14. Système de transfert de fluide selon les revendications 11 à 13, **caractérisé en ce que** l'électronique d'analyse comprend une unité de calcul centrale qui est reliée à au moins un dispositif de mesure du débit volumétrique ou à au moins une unité de calcul pour échanger des données.

15. Système de transfert de fluide selon la revendication 14, **caractérisé en ce que** l'unité de calcul centrale comprend une unité de mémoire pour l'enregistrement d'un débit volumétrique de consigne.

16. Système de transfert de fluide selon l'une des revendications 11 à 15, **caractérisé en ce que** le système comprend un ou plusieurs dispositifs de distribution de fluide.

17. Système de transfert de fluide selon la revendication 16, **caractérisé en ce que** chaque dispositif de distribution de fluide comprend au moins un dispositif de mesure du débit volumétrique.

18. Système de transfert de fluide selon la revendication 17, **caractérisé en ce que** le dispositif de mesure du débit volumétrique comprend une mémoire pour enregistrer un débit volumétrique de consigne.

19. Système de transfert de fluide selon l'une des revendications 17 à 18, **caractérisé en ce que** chaque dispositif de distribution de fluide comprend au moins un robinet de prélèvement.

20. Système de transfert de fluide selon l'une des revendications 16 à 19, **caractérisé en ce que** le capteur détecte au moins comme autre paramètre le niveau de remplissage du réservoir de fluide et/ou la durée de remplissage du réservoir et/ou les influences météorologiques.

21. Dispositif de mesure du débit volumétrique pour la mise en oeuvre du procédé selon l'une des revendications 1 à 10, **caractérisé en ce qu'**il comporte une unité de mémoire destinée à enregistrer un débit volumétrique de consigne.

22. Dispositif de mesure du débit volumétrique selon la revendication 21, **caractérisé en ce qu'**il comprend une électronique d'évaluation conçue pour la mise en oeuvre du procédé selon l'une des revendications 1 à 10.

23. Dispositif de mesure du débit volumétrique selon la revendication 21 ou 22, **caractérisé en ce que** le dispositif de mesure du débit volumétrique est conçu comme un compteur à piston.
